(19) Europäisches Patentamt
European Patent Office
Office européen des brevets

(11) **EP 1 483 766 B1**

(12) **FASCICULE DE BREVET EUROPEEN**

(45) Date de publication et mention
de la délivrance du brevet:
**29.07.2009 Bulletin 2009/31**

(21) Numéro de dépôt: **03722663.6**

(22) Date de dépôt: **19.02.2003**

(51) Int Cl.:
***G21C 7/20*** (2006.01)

(86) Numéro de dépôt international:
**PCT/FR2003/000556**

(87) Numéro de publication internationale:
**WO 2003/075282 (12.09.2003 Gazette 2003/37)**

(54) **PROCEDE DE CONCEPTION DU RESSORT D'ARAIGNEE D'UNE GRAPPE DE CONTROLE D'UN ASSEMBLAGE DE COMBUSTIBLE NUCLEAIRE**

ENTWURFSVERFAHREN EINER FEDER DER STEUERSTABSPINNE EINES KERNBRENNSTABBÜNDELS

METHOD FOR DESIGNING A SPIDER SPRING OF A BUNDLE CONTROLLING A NUCLEAR FUEL ASSEMBLY, CORRESPONDING SYSTEM, COMPUTER PROGRAMME AND PRODUCT

(84) Etats contractants désignés:
**BE DE ES FR GB SE**

(30) Priorité: **01.03.2002 FR 0202657**

(43) Date de publication de la demande:
**08.12.2004 Bulletin 2004/50**

(73) Titulaire: **Areva NP**
**92400 Courbevoie (FR)**

(72) Inventeurs:
• **CALLENS, Catherine**
**F-69006 LYON (FR)**

• **SEGURA, Hélène**
**F-69003 LYON (FR)**

(74) Mandataire: **Domenego, Bertrand et al**
**Cabinet Lavoix**
**2, place d'Estienne d'Orves**
**75441 Paris Cedex 09 (FR)**

(56) Documents cités:
**US-A- 4 826 648** **US-A- 5 076 995**

**Description**

La présente invention concerne un procédé de conception d'un assemblage de combustible nucléaire destiné à être placé dans un réacteur nucléaire, l'assemblage comprenant plusieurs tubes guides, et une grappe de contrôle comprenant elle-même plusieurs crayons de contrôle reçus dans les tubes guides et un support de crayons de contrôle, l'assemblage comprenant un ressort hélicoïdal d'amortissement de l'impact du support contre un embout supérieur de l'assemblage en cas de chute de la grappe de contrôle lors d'un arrêt du réacteur nucléaire.

US-5 076 995 décrit un assemblage de ce type.

On conçoit que les assemblages de combustibles nucléaires doivent être fiables pour permettre un fonctionnement sûr des réacteurs nucléaires.

Ainsi, des règles de conception et de construction de tels assemblages ont été établies.

Ces règles imposent un cadre général et des critères minimaux que les constructeurs d'assemblages doivent prendre en compte.

Pour ce qui concerne le ressort hélicoïdal d'amortissement, les règles de conception imposent de vérifier par des essais que l'intégrité du ressort n'est pas atteinte lors de l'impact se produisant en cas d'arrêt du réacteur.

Si ce critère imposé par les règles de conception permet de concevoir des assemblages de fiabilité satisfaisante, il serait souhaitable de limiter les marges de sécurité lors de la conception afin de réduire la masse et le coût des assemblages construits.

Un but de l'invention est de résoudre ce problème en fournissant un procédé permettant de concevoir des assemblages de combustibles nucléaires fiables tout en limitant les marges de conception.

A cet effet, l'invention a pour objet un procédé de conception d'un assemblage de combustible nucléaire destiné à être placé dans un réacteur nucléaire, l'assemblage comprenant plusieurs tubes guides et une grappe de contrôle comprenant elle-même plusieurs crayons de contrôle reçus dans les tubes guides et un support de crayons de contrôle, l'assemblage comprenant un ressort hélicoïdal d'amortissement de l'impact du support contre un embout supérieur de l'assemblage en cas de chute de la grappe de contrôle lors d'un arrêt du réacteur nucléaire, caractérisé en ce que le procédé est mis en oeuvre par ordinateur et comprend les étapes de :

a) détermination de l'évolution dans le temps de la vitesse de la grappe de contrôle après impact du support contre l'embout supérieur,

b) détermination, à partir de l'évolution de la vitesse déterminée à l'étape a), d'un effort longitudinal maximal de compression du ressort, et

c) détermination, à partir de l'effort maximal longitudinal de compression, d'au moins une contrainte maximale de cisaillement dans le ressort.

Selon des modes particuliers de réalisation, le procédé peut comprendre l'une ou plusieurs des caractéristiques suivantes, prise(s) isolément ou selon toutes les combinaisons techniquement possibles :

- une contrainte maximale de cisaillement est une contrainte de cisaillement le long de la fibre neutre du ressort,
- une contrainte maximale de cisaillement est une contrainte de cisaillement le long de la fibre du ressort la plus proche de son axe central longitudinal,
- le procédé comprend en outre une étape de vérification, en utilisant une contrainte maximale de cisaillement déterminée à l'étape c), qu'une contrainte maximale admissible par le ressort n'a pas été dépassée.

L'invention a en outre pour objet un système de conception d'un assemblage de combustible nucléaire, caractérisé en ce qu'il comprend un ordinateur et des moyens de stockage dans lesquels est stocké au moins un programme comprenant des instructions pour l'exécution d'étapes d'un procédé de conception d'un assemblage de combustible nucléaire tel que défini ci-dessus.

L'invention a en outre pour objet un programme d'ordinateur comprenant des instructions pour l'exécution des étapes d'un procédé tel que défini précédemment.

L'invention a également pour objet un support utilisable dans un ordinateur et sur lequel est enregistré un programme tel que défini précédemment.

L'invention sera mieux comprise à la lecture de la description qui va suivre, donnée uniquement à titre d'exemple, et faite en se référant aux dessins annexés sur lesquels :

- la figure 1 est une vue schématique en perspective avec arrachements d'un assemblage de combustible nucléaire conçu par un procédé selon l'invention :
- la figure 2 est une vue schématique latérale agrandie et partiellement en coupe, illustrant la structure de l'araignée de l'assemblage de la figure 1,

- la figure 3 est une vue partielle schématique en élévation latérale de l'assemblage de la figure 1 et illustrant plus particulièrement une paire tube guide/crayon de contrôle,
- la figure 4 est un schéma bloc illustrant le système de conception de l'assemblage de la figure 1,
- la figure 5 est un organigramme illustrant des étapes successives du procédé de conception mis en oeuvre par le système de la figure 4,
- la figure 6 représente une courbe d'évolution de la vitesse de chute d'un crayon de contrôle avant pénétration dans le tronçon inférieur du tube guide correspondant, cette évolution étant calculée par le système de la figure 4, et
- la figure 7 représente une courbe d'évolution de la vitesse de chute du même crayon de contrôle dans le tronçon inférieur du tube guide correspondant, cette évolution étant calculée par le système de la figure 4.

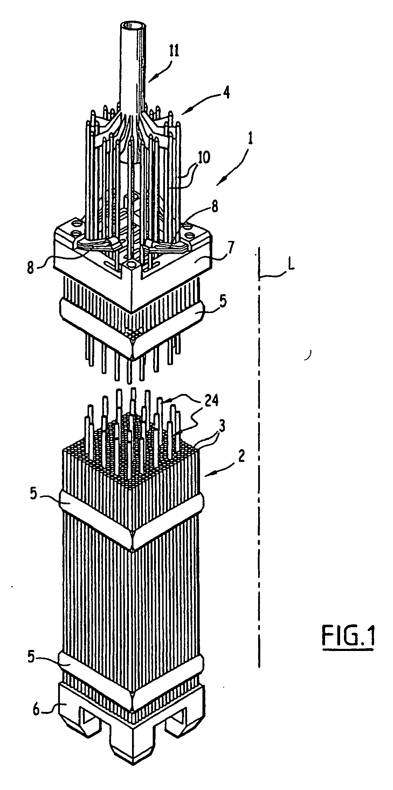

La figure 1 représente un assemblage 1 de combustible nucléaire qui comprend principalement un réseau 2 à base carrée de crayons 3 de combustible nucléaire et une grappe de contrôle 4.

L'assemblage 1 comprend des grilles 5 de maintien des crayons 3 qui sont réparties sur la hauteur des crayons 3. Un embout inférieur 6 est disposé sous les extrémités inférieures des crayons 3 et un embout supérieur 7 au-dessus des extrémités supérieures des crayons 3. L'embout supérieur 7 est muni de ressorts 8 d'appui sur la plaque supérieure du coeur du réacteur dans lequel l'assemblage 1 est destiné à être chargé.

La grappe de contrôle 4 comprend plusieurs crayons de contrôle 10, par exemple vingt quatre. Classiquement, les crayons de contrôle 10 comprennent un matériau absorbant les neutrons.

Les crayons 3 et 10 s'étendent parallèlement à une direction longitudinale L verticale.

Les crayons 10 sont portés à leurs extrémités supérieures par un support 11 généralement dénommé araignée.

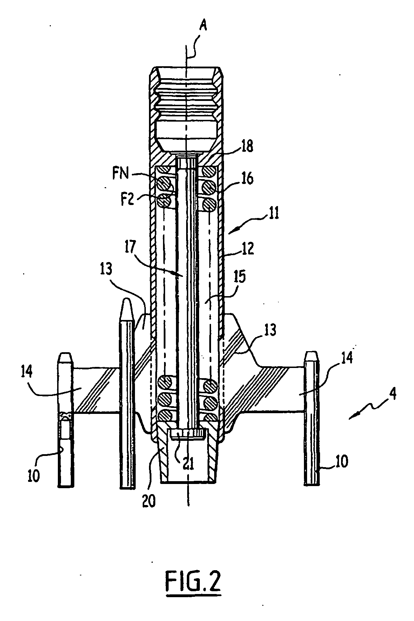

Comme illustré plus particulièrement par la figure 2, l'araignée 11 comprend un pommeau central vertical 12 et une série de bras ou ailettes 13 qui s'étendent radialement vers l'extérieur depuis l'extrémité inférieure du pommeau 12 jusqu'à leurs extrémités radialement extérieures 14.

Chaque crayon de contrôle 10 est relié par son extrémité supérieure à un bras 13.

Le pommeau 12 de l'araignée 11 possède un alésage central borgne 15 débouchant vers le bas et dans lequel un ressort 16 hélicoïdal d'amortissement est logé. Le ressort 16 s'étend verticalement le long d'un axe central A. Une vis 17 de tension s'étend sensiblement sur toute la hauteur de l'alésage 15 et est vissée dans la paroi 18 délimitant la partie supérieure de l'alésage 15.

La partie inférieure de la vis 17 traverse le fond d'une bague de retenue 20 qui prend appui sur l'extrémité inférieure du ressort 16. La tête 21 de la vis 17 s'appuie vers le haut contre le fond de la bague de retenue 20 pour plaquer le ressort 16 contre la paroi 18 du pommeau 12.

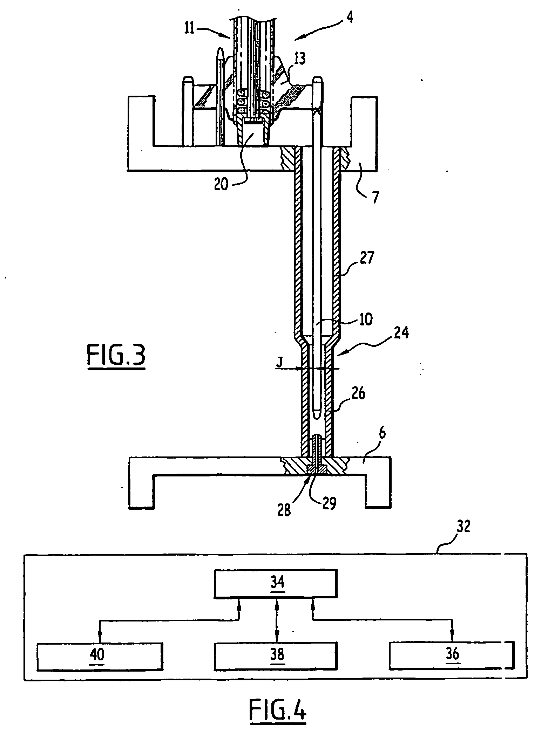

Comme illustré par la figure 3 pour un crayon de contrôle 10, chaque crayon de contrôle 10 est reçu dans un tube guide 24 respectif disposé dans le réseau 2 de crayons 3 combustible. Ainsi, vingt quatre paires tube guide/crayon de contrôle sont formées. Chacune de ces paires ayant une structure analogue, une seule sera décrite dans ce qui suit.

Le tube guide 24 s'étend depuis l'embout inférieur 6 jusqu'à l'embout supérieur 7. Le tube guide 24 comprend un tronçon inférieur 26 de diamètre intérieur réduit et un tronçon supérieur 27. Le tronçon inférieur 26 est relié à l'embout inférieur 6 par une vis épaulée 28 percée d'un alésage vertical 29 traversant.

Le tronçon inférieur 26 du tube guide 24 entoure le crayon de contrôle 10 avec un jeu radial J de passage.

Le tronçon supérieur 27 est fixé à l'embout supérieur 7 et débouche à l'extérieur de l'assemblage 1.

Des orifices latéraux sont ménagés dans le tronçon supérieur 27 à proximité du tronçon inférieur 26.

Lorsque l'assemblage 1 est chargé dans un réacteur nucléaire, le liquide de refroidissement du réacteur remplit l'intérieur du tube guide 24.

De manière classique, la grappe de contrôle 4 est mobile verticalement par rapport au reste de l'assemblage 1 pour permettre le réglage de la réactivité pendant le fonctionnement normal du réacteur, et donc les variations de puissance depuis la puissance nulle jusqu'à la pleine charge en fonction de l'enfoncement vertical des crayons de contrôle 10 dans le réseau 2 de crayons 3. Le déplacement vertical de la grappe de contrôle 24 est classiquement assuré via une tige de commande reliée à l'extrémité supérieure du pommeau 12.

Lors d'un arrêt du réacteur, la tige de commande et la grappe 4 chutent par gravité.

Au début de ce mouvement de chute les crayons de contrôle 10 ne sont guidés que par les tronçons supérieurs 27 des tubes guides 24 et n'ont pas encore atteint les tronçons inférieurs 26.

En fin de chute, les extrémités inférieures des crayons de contrôle 10 pénètrent dans les tronçons inférieurs 26. Le fluide de refroidissement contenu dans les tronçons 26 en est alors violemment chassé d'une part vers le haut et d'autre part vers le bas via les orifices 29 des vis épaulées 28.

Chaque tronçon inférieur 26 se comporte alors comme un amortisseur hydraulique freinant le mouvement de chute du crayon de contrôle 10 correspondant et donc de la grappe 4.

Cette phase de freinage se termine en fin de course par l'impact de l'araignée 11 sur l'embout supérieur 7 de l'assemblage 1.

Cet impact s'effectue par l'intermédiaire de la bague de retenue 20. Au cours de cet impact, le ressort 16 est comprimé verticalement pour amortir le choc.

Selon l'invention, l'assemblage 1 a été conçu pour prendre en compte des contraintes particulières provoquées dans l'assemblage par la chute de la grappe de contrôle 4 lors d'un tel arrêt du réacteur.

Ainsi, pour concevoir l'assemblage 1, on a utilisé notamment un système informatique 32 tel que représenté schématiquement sur la figure 4.

Ce système 32 comprend par exemple un ordinateur ou unité de traitement d'informations 34 comprenant un ou plusieurs processeurs, des moyens 36 de stockage, des moyens 38 d'entrée/sortie et éventuellement des moyens 40 d'affichage.

Des instructions exécutables par l'ordinateur 34 sont stockées sous la forme d'un ou plusieurs programmes dans les moyens 36 de stockage.

Ces instructions sont par exemple des instructions en code de programmation FORTRAN.

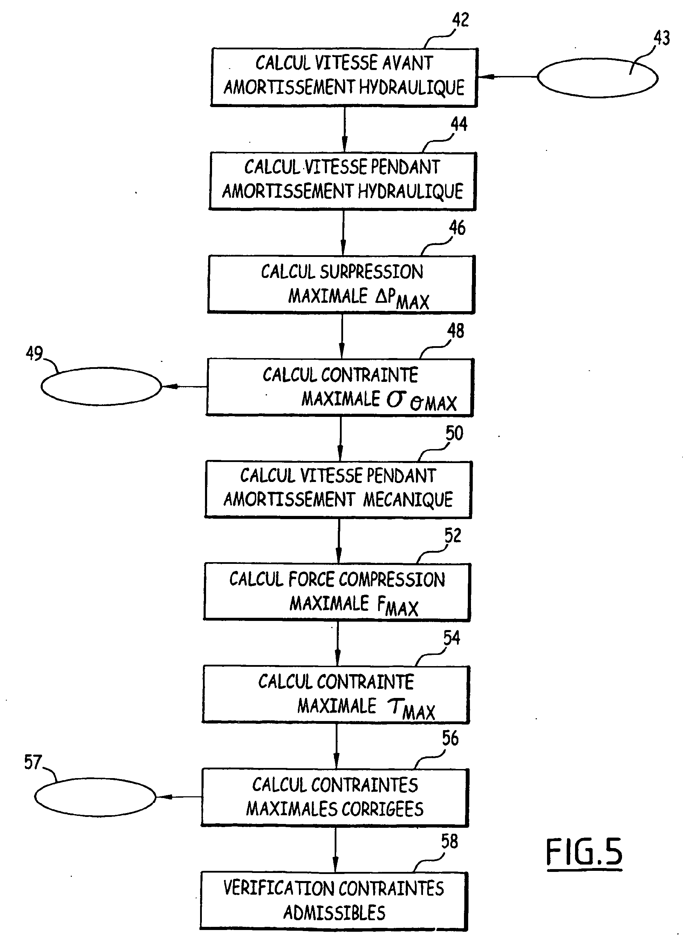

Ces différentes instructions, lorsqu'elles sont exécutées par l'ordinateur 34, permettent la mise en oeuvre du procédé illustré par l'organigramme de la figure 5.

Dans une première étape illustrée par le bloc 42 de cette figure, l'ordinateur 34 calcule, à partir de données 43, l'évolution de la vitesse de chute d'un crayon de contrôle 10 dans le tronçon supérieur 27 du tube guide 24 correspondant en cas d'arrêt du réacteur.

Ce calcul peut être effectué en supposant, par exemple, que le crayon de contrôle 10 est soumis tout d'abord à des efforts constants :

- effort de gravité : $fg = Mg$,
- poussée d'Archimède : $fa = -\rho\, gV$,
- différence de pression dans le coeur : $fc$, et
- frottements mécaniques : $fm$,

où M et V sont respectivement la masse et le volume de la grappe 4 et de sa tige de commande.

Le crayon de contrôle 10 est également soumis à des efforts fonction de sa vitesse ou de sa position, par exemple des frottements hydrauliques que l'on peut supposer de la forme : $fh = -c1\,(M + \rho V)\, v^2$ avec $v$ = vitesse de la grappe 4 et donc du crayon 10 considéré.

Ainsi, l'équation du mouvement du crayon dans le tronçon supérieur 27 du tube guide 24 s'écrit :

$$(M + \rho V)\,\frac{dv}{dt} = \Sigma f$$

On obtient donc :

$$\frac{dv}{dt} = c2 - c1\,v^2$$

avec c1 = frottements hydrauliques dans le tube guide, et

$$c2 = \frac{fg + fa + fc + fm}{M + \rho V}\,.$$

C1 et c2 sont par exemple des données expérimentales mesurées lors d'essais de chute de grappe de contrôle 4. Ces données sont, avec les autres données nécessaires au calcul telles que la masse et le volume de la grappe 4 et de sa tige de commande, introduites par exemple sous forme d'un fichier 43 grâce aux moyens 38 d'entrée/sortie.

L'ordinateur 34 résout l'équation du mouvement du crayon de contrôle 10 par exemple grâce à la méthode de NEWTON.

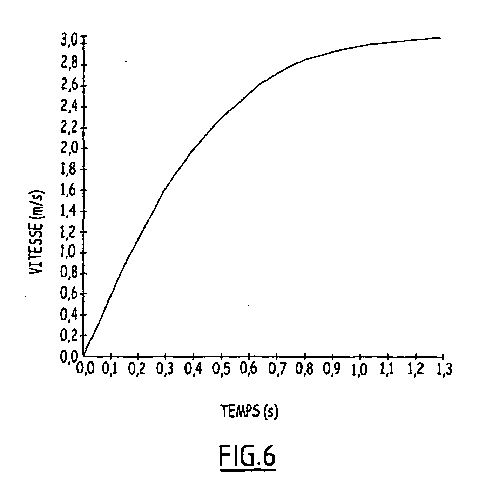

Ainsi on connaît l'évolution de la vitesse du crayon de contrôle 10 dans le tronçon supérieur 27 en fonction du temps. Le profil ainsi déterminé peut être affiché sous forme d'une courbe par les moyens 40 d'affichage. Cette courbe est illustrée par la figure 6.

Ainsi, à l'issue de l'étape illustrée par le bloc 42, on connaît la vitesse du crayon de contrôle 10 à l'entrée du tronçon inférieur d'amortissement 26 du tube guide 24.

A partir des résultats de l'étape du bloc 42, l'ordinateur 34 calcule l'évolution de la vitesse du crayon de contrôle 10 lors de sa chute dans le tronçon inférieur d'amortissement 26.

Cette étape est schématisée par le bloc 44.

Cette étape peut être effectuée en utilisant l'équation :

$$- \frac{dv}{dt} = c2 - \left( c1 + \frac{SCA \times NCA}{M + \rho V} \frac{\Delta P}{v^2} \right) v^2$$

avec

$$c2 \approx \frac{fg + fa}{M + \rho V} = \frac{M - \rho V}{M + \rho V} g$$

SCA = section du crayon 10, et
NCA = nombre de crayons 10 dans la grappe 4.

On fait donc ici l'hypothèse que $f_c$ et $f_m$ sont négligeables.

La différence $\Delta P$ représente la surpression créée dans le liquide de refroidissement contenu dans le tube guide 24, c'est à dire sa pression entre l'extrémité inférieure du crayon 10 et la pression régnant dans le tronçon supérieur 27 du tube guide 24.

$\Delta P$ peut être déterminée par la formule :

$$\Delta P = \frac{1}{2} \rho Q^2 v^2 (EXPA + CONTRA + FECR \times CISA \times z)$$

où

$$EXPA = \left( \frac{SCA}{SACM} \left( 1 - \frac{SACM}{SACTG} \right) \right)^2$$

avec SM = section du tronçon inférieur 26,
SACM = SM - SCA = section de l'espace annulaire entre le crayon 10 et le tronçon inférieur 26,
SACTG = STG - SCA où STG est la section du tronçon supérieur 27 du tube guide 24,

$$CONTRA = 0,4 \left( 1 - \frac{SACM}{SM} \right) \left( \frac{SCA}{SACM} \right)^2,$$

FECR = coefficient de perte de charge par frottement dans le tronçon inférieur 26,

$$CISA = \left( \frac{SCA}{SM} \right)^2 \frac{1}{DM},$$

DM = diamètre moyen du tube guide 24 dans le tronçon supérieur 27,
z = hauteur du crayon 10 insérée dans le tronçon inférieur 26 du tube guide 24, et
Q = fraction du liquide s'écoulant vers le haut hors du tronçon inférieur 26.

La résolution des équations régissant le mouvement du crayon 10 après pénétration du tronçon inférieur 26 est assurée par l'ordinateur 34, par exemple en utilisant la méthode de RUNGE-KUTTA.

Ainsi, on connaît à l'issue de l'étape 44 l'évolution de la vitesse du crayon de contrôle 10 dans le tronçon inférieur 26 du tube guide 24 avant impact de l'araignée 11 sur l'embout supérieur 7.

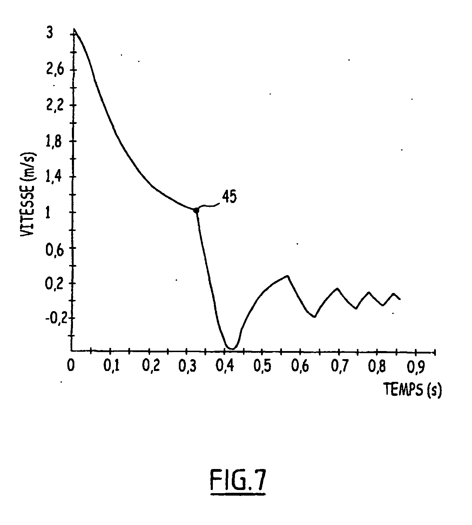

Le profil de vitesse ainsi déterminé peut être par exemple affiché par les moyens 40 comme illustré par la figure 7. Sur la courbe de cette figure 7, le profil de vitesse déterminé lors de l'étape 44 est le tronçon situé à gauche du point 45.

L'ordinateur 34 assure ensuite, dans l'étape du bloc 46, le calcul de la surpression maximale créée $\Delta P_{MAX}$.

Ce calcul peut être assuré par exemple à partir de la formule :

$$\Delta P = \frac{1}{2} \, \rho Q^2 v^2 (EXPA + CONTRA + FECR \times CISA \times z)$$

L'ordinateur 34 assure dans l'étape du bloc 48 le calcul d'une contrainte circonférentielle et normale maximale $\sigma\theta_{MAX}$ à laquelle le tronçon inférieur 26 du tube guide 24 est soumis du fait de la surpression maximale $\Delta P_{MAX}$.

Cette contrainte peut être calculée à partir de la formule :

$$\sigma_{\theta MAX} = \frac{1}{2} \Delta P_{MAX} \left( \frac{DPM}{EMP} + 1 \right)$$

où DPM = diamètre intérieur du tronçon inférieur 26, et
EMP = épaisseur minimale de la paroi du tronçon inférieur 26.

Le système 32 peut alors fournir, grâce aux moyens 38 d'entrée / sortie, un premier résultat sous forme d'un fichier 49 contenant la valeur $\sigma\theta_{MAX}$ déterminée, et éventuellement la surpression maximale $\Delta Pmax$ déterminée.

Ensuite, le système 32 assure le calcul de l'évolution de la vitesse du crayon de contrôle 10 après entrée en contact de l'araignée 11 et de l'embout supérieur 7.

Cette étape de calcul est illustrée par le bloc 50 sur la figure 5.

Ce calcul peut être, par exemple, assuré en utilisant l'équation suivante lorsque la bague 20, et donc l'araignée 11, est en appui sur l'embout supérieur 7 :

$$(M + \rho V) \frac{dv}{dt} = (M - \rho V) \, g - PRCH - K \, (z - LAI) - c3 \, v$$

avec PRCH = précharge du ressort 16 = PRCMP x K où PRCMP est la précompression du ressort 16 et K la raideur du ressort 16,
LAI = longueur parcouru par le crayon de contrôle dans le tronçon inférieur 26 avant impact, et
c3 = coefficient d'amortissement hydraulique pour modéliser l'amortissement dans le tronçon inférieur 26.

Dans le cas d'un rebond, c'est-à-dire lorsque l'araignée 11 n'est plus en contact avec l'embout supérieur 7, l'équation de mouvement du crayon de contrôle 10 considéré s'écrit :

$$(M + \rho V) \frac{dv}{dt} = (M - \rho V) \, g - c3 \, v$$

Ces deux équations sont intégrées par l'ordinateur 34, par exemple en utilisant la méthode de RUNGE-KUTTA.

L'étape 50 permet donc de connaître la cinématique de la grappe de contrôle 4 lors de l'amortissement mécanique du choc par le ressort 16. Le profil de vitesse ainsi déterminée peut être par exemple affiché par les moyens 40. Ce profil correspond au tronçon situé à droite du point 45 sur la courbe de la figure 7.

A partir des résultats de cette étape, le système 32 assure dans l'étape 52 le calcul d'une force verticale de compression maximale $F_{MAX}$ à laquelle le ressort 16 est soumis lors de l'amortissement mécanique.

Ce calcul peut être assuré, par exemple, à partir de la formule :

$$F_{MAX} = \max \{ K(z - LAI) + PRCH \}$$

Le système 32 assure alors dans l'étape du bloc 54 le calcul d'une contrainte maximale de cisaillement approchée $\tau_{MAX}$ dans le ressort 16 :

$$\tau_{MAX} = \frac{8 F_{MAX} DFN}{\pi DFR^3}$$

avec DFN = DER-DFR, et
DER = diamètre extérieur du ressort 16,

DFR = diamètre du fil du ressort 16.

Ensuite, le système 32 peut éventuellement assurer à partir de la contrainte maximale $\tau_{max}$, le calcul de contraintes maximales corrigées.

Ces contraintes peuvent être calculées en multipliant $\tau_{max}$ par différents facteurs.

Ainsi on peut calculer :

$$\tau_{MAX1} = \tau_{MAX} \times K_c,$$

et

$$\tau_{MAX2} = \tau_{MAX} \times K,$$

avec

$$K_c = 1 + \frac{0.5}{C},$$

$$C = \frac{DFN}{DFR},$$

et

$$K = \frac{4C-1}{4C-4} + \frac{0,615}{C}$$

La contrainte $\tau_{MAX1}$ correspond à la contrainte de cisaillement le long de la fibre neutre FN (fig. 2) du ressort 16. La contrainte $\tau_{MAX2}$ correspond à la contrainte le long de la fibre F2 (fig. 2) du ressort 16 la plus proche de l'axe central vertical A du ressort 16 (voir figure 2).

Le système 32 fournit à l'issue de cette étape illustrée par le bloc 56 les différentes contraintes de cisaillement maximales calculées, par exemple sous forme de données stockées dans un fichier 57 émis par les moyens 38 d'entrée/sortie.

A partir des données contenues dans les fichiers 49 et 57, qui ont également été stockés dans les moyens 36 de stockage, l'ordinateur 34 va vérifier que les contraintes maximales calculées sont bien acceptables pour les matériau constituant respectivement le tube guide 24 et le ressort hélicoïdal 16.

Cette étape a été schématisée par le bloc 58 sur la figure 5. Au cours d'une telle étape, le système 32 va par exemple vérifier que les contraintes de cisaillement maximales calculées au cours des étapes 54 et 56 sont inférieures à des valeurs maximales admissibles par le matériau constituant le ressort 16. Cette vérification est assurée par comparaison de $\tau_{MAX}$, $\tau_{MAX1}$ et $\tau_{MAX2}$ à une valeur maximale admissible par le matériau du ressort 16.

Pour ce qui concerne la contrainte maximale circonférentielle $\sigma\theta_{MAX}$, la vérification peut être assurée à partir d'une formule de la forme :

$$f(\sigma\theta_{MAX}) < \sigma_{admissible}$$

ou $\sigma$ admissible se rapporte au matériau constituant les tronçons inférieurs 26 des tubes guides 24.

La fonction f peut être une fonction prenant en compte d'autres contraintes auxquelles les tubes guides 24 peuvent être soumis. Une telle contrainte peut être une contrainte verticale de compression $\sigma_A$ auquel les tubes guides 24 sont soumis lors dé l'appui des ressorts 8 de l'embout supérieur 7 sur la plaque supérieure du coeur pour contrebalancer la poussée hydrostatique en fonctionnement.

Ainsi, la fonction f peut être, par exemple, de la forme $f(\sigma\theta_{MAX}, \sigma_A) = \sigma\theta_{MAX} + \sigma_A$.

On notera que cette dernière étape, illustrée par le bloc 58, peut être mise en oeuvre par un logiciel séparé qui assure de manière générale la validation de différents paramètres de conception de l'assemblage 1 à partir de résultats fournis par divers logiciels dédiés chacun à la prise en compte de conditions particulières de fonctionnement et parmi lesquels figure(nt) le ou les logiciel(s) assurant la mise en oeuvre des étapes 42, 44, 46, 48, 50, 52, 54 et 56.

De manière générale, le fichier 43 comprenant les données 43 utilisées par le procédé pour les différents calculs peut comprendre les données du tableau 1 suivant.

Tableau 1

| | | |
|---|---|---|
| diamètre extérieur crayon de contrôle 10 | (m) | Nominal ; maximal |
| diamètre intérieur tronçon supérieur 27 | (m) | Nominal ; maximal |
| diamètre intérieur tronçon inférieur 26 | (m) | Nominal ; maximal |
| longueur totale tronçon inférieur 26, | (m) | |
| longueur d'amortissement avant impact | (m) | |
| épaisseur mininum paroi tronçon inférieur 26 | (m) | |
| rugosité maximale crayon 10/ tube 24 | (m) | |
| diamètre orifice 29 | (m) | |
| longueur orifice 29 | (m) | |
| rugosité orifice 29 | (m) | |
| masse mobile M | (kg) | |
| masse volumique du liquide | (kg/m$^3$) | |
| viscosité cinématique du liquide | (m$^2$/s) | |
| c1 | (/m) | |
| c2 | (m/s$^2$) | |
| module de Young du tube guide 24 | (Pa) | |
| coefficient de Poisson du tube guide 24 | | |
| précompression du ressort 16 | (m) | |
| précharge du ressort 16 | (N) | |
| longueur du ressort 16 avec les spires jointives | (m) | |
| diamètre extérieur du ressort 16 | (m) | |
| diamètre du fil du ressort 16 | (m) | |
| enfoncement lorsque le pommeau 12 est au contact de l'embout supérieur 7 | (m) | |
| FIN | | |

De même le fichier 49 comprenant les résultats issus de l'étape 48 peut comprendre les données du tableau 2 ci-dessous.

Tableau 2

| | |
|---|---|
| $\Delta P_{MAX}$ : surpression maximale dans le tronçon inférieur 26 | (Pa) |
| $Z_{MAX}$ : enfoncement correspondant dans le tronçon inférieur 26 | (m) |
| $\sigma\theta_{MAX}$ : contrainte maximale dans le tronçon inférieur 26 | (Pa) |
| fmax : force maximale sur l'embout inférieur 6 | (N) |
| tdur : temps de chute dans le tronçon inférieur 26 avant impact | (s) |
| vfin : vitesse d'impact de la grappe 4 sur l'embout supérieur 7 | (m/s) |

Le fichier 57 comprenant les résultats de l'étape 56 peut quant à lui contenir les données du tableau 3 ci-dessous.

Tableau 3

| | |
|---|---|
| $F_{MAX}$ : force de compression maximale sur le ressort 16 | (N) |
| $h_{MAX}$ : flèche maximale du ressort 16 | (m) |
| $\tau_{MAX}$ : contrainte maximale approchée dans le ressort | (Pa) |
| $\tau_{MAX1}$ : contrainte maximale approchée corrigée par Kc | (Pa) |
| $\tau_{MAX2}$ : contrainte maximale approchée corrigée par K (facteur de Wahl) | (Pa) |

On a pu vérifier expérimentalement que les surpressions maximales et les contraintes maximales obtenues grâce aux étapes 42, 44, 46 et 48 étaient fiables. Ainsi, la première partie correspondante du procédé permet de concevoir des tubes guides 24 fiables. En outre, cette première partie ne calcule qu'une seule contrainte qui apparaît être la contrainte pertinente pour les conditions prises en compte. Par conséquent, cette première partie du procédé permet de limiter les marges de sécurité lors de la conception et donc de concevoir des assemblages relativement légers et économiques

La deuxième partie du procédé, qui correspond aux étapes 50, 52, 54 et 56, permet également de calculer des contraintes maximales de manière fiable, comme confirmé expérimentalement.

Ainsi, la deuxième partie du procédé permet d'atteindre par le calcul une conception fiable des ressorts 16 d'araignée ce qui s'avère avantageux par rapport à la seule méthode d'essais imposée jusqu'à présent par la réglementation. En effet, il apparaît que la deuxième partie du procédé ne calcule que les quelques contraintes, et notamment celles sur la fibre F2 du ressort 16 la plus proche de l'axe central A du ressort, qui s'avèrent pertinentes pour les conditions envisagées. Ainsi, la deuxième partie du procédé permet de réduire les marges de conception.

De manière plus générale les étapes 42, 44, 46 et 48 d'une part, et 50, 52, 54 et 56 d'autre part, peuvent être assurées par des logiciels distincts.

Afin d'accroître la fiabilité du calcul, on peut pour la mise en oeuvre de la première partie du procédé, utiliser comme jeu de passage J la valeur nominale de ce jeu, ou cette valeur nominale corrigée par la tolérance de fabrication, ou une valeur résultant d'études statistiques de la dispersion des jeux de passages J obtenus dans des assemblages construits.

Dans une variante, on pourra utiliser une valeur de jeu J plus importante pour les étapes 42 et 44 et une valeur de jeu J plus faible pour les étapes 46 et 48. Cela permet de calculer une valeur de contrainte $\sigma\theta_{MAX}$ élevée, puisque la vitesse atteinte lors de la chute du crayon 10 considéré est élevée et le volume disponible dans le tronçon inférieur 26 pour le liquide lors de l'amortissement est faible. Toutefois, cette valeur élevée de contrainte n'est pas irréaliste et ne conduit donc pas à des marges de conception injustifiées, comme illustré par l'exemple suivant.

Selon une variante particulière, la valeur supérieure peut être une valeur maximale de jeu J vérifiée avec une certaine probabilité, par exemple 95%, dans des assemblages construits, et la valeur inférieure une valeur minimale obtenue avec la même probabilité. Cette variante permet de s'approcher de la situation où une seule paire tube guide/crayon de contrôle présente le jeu J minimal, où la contrainte maximale $\sigma\theta_{MAX}$ serait atteinte, et où toutes les autres paires tube guide/crayon de contrôle présentent le jeu de passage J maximal, ce qui serait le cas le plus pénalisant.

La première partie du procédé pourra également, dans certaines variantes, prendre en compte des formes de tronçon inférieur 26 d'amortissement distinctes de celles décrites jusqu'à présent. Ainsi, ces tronçons inférieurs d'amortissement pourront présenter plusieurs parties successives de diamètres réduits éventuellement séparées par des parties de diamètres augmentés, généralement dénommées bulles. Dans certaines variantes, la première partie du procédé sera mise en oeuvre avec des vis épaulées 28 non-percées par des alésages 29.

De manière plus générale encore, on peut mettre en oeuvre la deuxième partie concernant la conception du ressort 16 sans s'intéresser au calcul de la surpression $\Delta P$ et de la contrainte $\sigma\theta_{MAX}$.

**Revendications**

**1.** Procédé de conception d'un assemblage (1) de combustible nucléaire destiné à être placé dans un réacteur nucléaire, l'assemblage comprenant plusieurs tubes guides (24) et une grappe de contrôle (4) comprenant elle-même plusieurs crayons de contrôle (10) reçus dans les tubes guides (24) et un support (11) de crayons de contrôle (10), l'assemblage comprenant un ressort hélicoïdal (16) d'amortissement de l'impact du support (11) contre un embout supérieur (7) de l'assemblage en cas de chute de la grappe de contrôle (4) lors d'un arrêt du réacteur nucléaire, **caractérisé en ce que** le procédé est mis en oeuvre par ordinateur et comprend les étapes de :

a) détermination de l'évolution dans le temps de la vitesse de la grappe de contrôle (4) après impact du support (11) contre l'embout supérieur (7),
b) détermination, à partir de l'évolution de la vitesse déterminée à l'étape a), d'un effort longitudinal maximal ($F_{MAX}$) de compression du ressort (16), et
c) détermination, à partir de l'effort maximal longitudinal de compression ($F_{MAX}$), d'au moins une contrainte maximale de cisaillement ($\tau_{MAX}$) dans le ressort (16).

**2.** Procédé selon la revendication 1, **caractérisé en ce qu'**une contrainte maximale de cisaillement ($\tau_{MAX}$) est une contrainte de cisaillement le long de la fibre neutre (FN) du ressort (16).

**3.** Procédé selon la revendication 1 ou 2, **caractérisé en ce qu'**une contrainte maximale de cisaillement est une contrainte de cisaillement le long de la fibre (F2) du ressort (16) la plus proche de son axe central longitudinal (A).

4.  Procédé selon l'une des revendications précédentes, **caractérisé en ce qu'**il comprend en outre une étape de vérification, en utilisant une contrainte maximale de cisaillement déterminée à l'étape c), qu'une contrainte maximale admissible par le ressort (16) n'a pas été dépassée.

5.  Système de conception d'un assemblage de combustible nucléaire, **caractérisé en ce qu'**il comprend un ordinateur (34) et des moyens (36) de stockage dans lesquels est stocké au moins un programme comprenant des instructions pour l'exécution d'étapes d'un procédé de conception d'un assemblage de combustible nucléaire selon l'une quelconque des revendications précédentes.

6.  Programme d'ordinateur comprenant des instructions pour l'exécution des étapes d'un procédé selon l'une quelconque des revendications 1 à 4.

7.  Support utilisable dans un ordinateur et sur lequel est enregistré un programme selon la revendication 6.


**Claims**

1.  Method for designing a nuclear fuel assembly (1) intended to be placed in a nuclear reactor, said assembly comprising several guide tubes (24) and a control cluster (4), which itself comprises several control rods (10) accommodated in the guide tubes (24) and a support (11) for the control rods (10), said assembly comprising a helical spring (16) for damping the impact of the support (11) against an upper joining piece (7) of the assembly if the control cluster (4) falls during stoppage of the nuclear reactor, **characterised in that** the method is implemented by computer and comprises the steps of:

    a) determining the development over time of the speed of the control cluster (4) after impact of the support (11) against the upper joining piece (7),
    b) determining a maximum longitudinal compressive stress ($F_{MAX}$) of the spring (16) from the development of the speed determined in step a), and
    c) determining at least one maximum shear stress ($\tau_{MAX}$) in the spring (16) from the maximum longitudinal compressive stress ($F_{MAX}$).

2.  Method according to claim 1, **characterised in that** a maximum shear stress ($\tau_{MAX}$) is a shear stress along the neutral fibre (FN) of the spring (16).

3.  Method according to claim 1 or 2, **characterised in that** a maximum shear stress is a shear stress along the fibre (F2) of the spring (16) closest to its longitudinal centre axis (A).

4.  Method according to one of the preceding claims, **characterised in that** it additionally comprises a step of verifying that a maximum stress admissible through the spring (16) has not been exceeded, by using a maximum shear stress determined in step c).

5.  System for designing a nuclear fuel assembly, **characterised in that** it comprises a computer (34) and storage means (36), in which at least one program is stored, which comprises instructions for executing steps of a method for designing a nuclear fuel assembly according to any one of the preceding claims.

6.  Computer program comprising instructions for executing steps of a method for designing a nuclear fuel assembly according to any one of claims 1 to 4.

7.  Support usable in a computer and on which a program according to claim 6 is recorded.


**Patentansprüche**

1.  Verfahren zur Konzipierung einer Nuklear-Brennelementkassette (1), die zum Platzieren in einem Atomreaktor bestimmt ist, wobei die Kassette mehrere Führungsrohre (24) und ein Steuerbündel (4) aufweist, das selbst mehrere Steuerstäbe (10), die in den Führungsrohren (24) aufgenommen sind, und eine Halterung (11) für die Steuerstäbe (10) aufweist, wobei die Kassette eine Schraubenfeder (16) zum Dämpfen des Stoßens der Halterung (11) gegen ein oberes Endstück (7) der Kassette im Fall eines Fallens des Steuerbündels (4) bei einem Abschalten des Atomreaktors aufweist, **dadurch gekennzeichnet, dass** das Verfahren mittels eines Computers durchgeführt wird und die folgenden Schritte aufweist:

a) Ermitteln der Entwicklung der Geschwindigkeit des Steuerbündels (4) über der Zeit nach dem Stoßen der Halterung (11) gegen das obere Endstück (7),
b) Ermitteln, ausgehend von der in Schritt a) ermittelten Entwicklung der Geschwindigkeit, einer maximalen Längs-Druckbeanspruchung ($F_{MAX}$) der Feder (16), und
c) Ermitteln, ausgehend von der maximalen Längs-Druckbeanspruchung ($F_{MAX}$), mindestens einer maximalen Scherspannung ($\tau_{MAX}$) in der Feder (16).

2. Verfahren gemäß Anspruch 1, **dadurch gekennzeichnet, dass** eine maximale Scherspannung ($\tau_{MAX}$) eine Scherspannung entlang der neutralen Faser (FN) der Feder (16) ist.

3. Verfahren gemäß Anspruch 1 oder 2, **dadurch gekennzeichnet, dass** eine maximale Scherspannung eine Scherspannung entlang der Faser (F2) der Feder (16) ist, die deren zentralen Längsachse (A) am nächsten ist.

4. Verfahren gemäß einem der vorhergehenden Ansprüche, **dadurch gekennzeichnet, dass** es ferner einen Schritt des Verifizierens aufweist, dass eine maximale für die Feder (16) zulässige Spannung nicht überschritten wurde, wobei eine in Schritt c) ermittelte maximale Scherspannung verwendet wird.

5. System zur Konzipierung einer Nuklear-Brennelementkassette, **dadurch gekennzeichnet, dass** es einen Computer (34) und Speichermittel (36) aufweist, in denen mindestens ein Programm gespeichert ist, das Befehle zum Ausführen von Schritten eines Verfahrens zur Konzipierung einer Nuklear-Brennelementkassette gemäß einem der vorhergehenden Ansprüche aufweist.

6. Computerprogramm, das Befehle für das Ausführen der Schritte eines Verfahrens gemäß einem der Ansprüche 1 bis 4 aufweist.

7. Träger zur Verwendung in einem Computer, auf dem ein Programm gemäß Anspruch 6 gespeichert ist.

FIG.1

FIG.2

FIG.3

FIG.4

42

CALCUL VITESSE AVANT
AMORTISSEMENT HYDRAULIQUE

43

44

CALCUL VITESSE PENDANT
AMORTISSEMENT HYDRAULIQUE

46

CALCUL SURPRESSION
MAXIMALE $\Delta P_{MAX}$

49

48

CALCUL CONTRAINTE
MAXIMALE $\sigma_{\theta MAX}$

50

CALCUL VITESSE PENDANT
AMORTISSEMENT MECANIQUE

52

CALCUL FORCE COMPRESSION
MAXIMALE $F_{MAX}$

54

CALCUL CONTRAINTE
MAXIMALE $\tau_{MAX}$

57

56

CALCUL CONTRAINTES
MAXIMALES CORRIGEES

58

VERIFICATION CONTRAINTES
ADMISSIBLES

FIG.5

FIG.6

FIG.7

**RÉFÉRENCES CITÉES DANS LA DESCRIPTION**

**Documents brevets cités dans la description**

• US 5076995 A